# EUROPEAN PATENT SPECIFICATION

(11) **EP 2 676 184 B1**
(45) Date of publication and mention of the grant of the patent: **11.08.2021**
(21) Application number: 11711952.9
(22) Date of filing: 15.02.2011
(51) Int. Cl.: G06F 3/0488, G06F 3/0482

(54) **DISPLAYING A PANEL**
ANZEIGE EINES PANELS
APPARITION D'UN AFFICHAGE SUR UN ÉCRAN

(43) Date of publication of application: 25.12.2013
(73) Proprietor: Nokia Technologies Oy, 02610 Espoo (FI)
(72) Inventor: SUVANTO, Mikko, FI-33710 Tampere (FI)
(74) Representative: Nokia EPO representatives
(86) International application number: PCT/FI2011/050136
(87) International publication number: WO 2012/110678

(56) References cited:
- EP-A2- 1 703 363
- WO-A2-2007/014064
- WO-A2-2009/049331
- WO-A2-2011/031575
- JP-A- 2005 092 441
- US-A- 6 121 960
- US-A1- 2005 162 402
- US-A1- 2006 033 724
- US-A1- 2007 216 659
- US-A1- 2009 091 541
- US-A1- 2009 228 792
- US-A1- 2010 083 111
- US-A1- 2010 164 959
- US-A1- 2010 220 067
- US-A1- 2010 302 172
- US-B1- 7 768 501

## Description

### BACKGROUND:

### Field:

Example embodiments of the invention relate to displaying a panel of user interface components in response to a touch gesture.

### Description of the Related Art:

User interfaces (Uls) provide a mechanism by which users can interact with a machine, device, or system. A user interface includes physical hardware and software components that together provide a means of inputting information to allow a user to manipulate a system, and provide a means of outputting information to allow the system to indicate the effects of the user's manipulation. A graphical user interface (GUI) is a type of user interface that utilize images and graphics, in addition to text, to facilitate interaction between a user and the system. For example, a GUI may offer graphical icons, windows, and/or buttons to represent information and actions available to the user.

Examples of devices that may incorporate a GUI include, but are not limited to, computers or computing systems, telephones, music and media players, gaming systems, navigation systems, appliances, and many other devices and machines. Examples of some typical graphical user interface controls include drop down lists, combo boxes, list boxes, text fields and areas, buttons, icons, scrollbars, etc.

WO 2009/049331 A2 describes a user interface for a data processing machine which user interface is combined with a primary display screen for the machine or which is configured to be used with a machine which usually includes a primary display screen, which user interface comprises a secondary touch-sensitive display screen which is configured to be an input device for the machine and configured such that the graphic display of the input device is configured to complement and operatively cooperate with the graphic display of the primary display screen.

US 2010/220067 A1 describes a portable electronic device and a method for operating a menu selection interface of the portable electronic device are provided. The menu selection interface is displayed on a touch-sensitive display of the portable electronic device. The method generates a sensing signal when a menu item of the menu selection interface is touched, and analyzes the sensing signal to determine a touched menu item of the menu selection interface. The method further generates a first responsive signal according to the touched menu item, and displays menu icons of the touched menu item on the touch-sensitive display when the first responsive signal is received. In addition, the method generates a second responsive signal when one of the menu icons is selected, and executes a function action corresponding to the selected menu icon when the second responsive signal is received.

US 2010/220067 A1 describes the manipulation of objects on a multi-touch graphical user interface. For example, a method of operating a multi-touch graphical user interface on a computing device comprises displaying a group of objects on the graphical user interface in a group representation, receiving a first multi-touch input in which a first number of touches associated with the group representation are moved on the graphical user interface, and in response to the first multi-touch input, changing a scale of the objects in the group representation. The method further comprises receiving a second multi-touch input in which a second number of touches associated with the group representation are moved on the graphical user interface, and in response to the second multi-touch input, changing an organization of the objects in the group representation on the graphical user interface.
US 2007/216659 A1 describes an input method for a mobile communication apparatus, and such a mobile communication apparatus, which comprises a processor and a touch sensitive display. The method comprises displaying a touch keypad comprising a set of keys, detecting an object over one key of said set of keys, and displaying, upon detection of said object, a first sub-set of keys adjacent to said one key, wherein said sub-set of keys is associated with a first set of sub-functions of said one key.
JP 2005 092441 A, US 2009/228792 A1, US 6 121 960 A, WO 2011/031575 A2, US 2010/302172 A1, US 7 768 501 B1, US 2009/091541 A1, EP 1 703 363 A2, US 2005/162402 A1, US 2010/164959 A1 also disclose background information.

### SUMMARY:

One example includes a method according to claim 1.

Another example includes an apparatus according to claim 8.

Another example is directed to a computer program according to claim 13.

### BRIEF DESCRIPTION OF THE DRAWINGS:

For proper understanding of the invention, reference should be made to the accompanying drawings, wherein:
Fig. 1 illustrates a block diagram of an apparatus according to one example embodiment;
Fig. 2 illustrates an exemplary implementation of a keypad according to an example embodiment;
Fig. 3a illustrates an example of a display in operation according to one example embodiment;
Fig. 3b illustrates an example of a display in operation according to an example embodiment;
Fig. 3c illustrates an example of a display in operation according to an example embodiment;
Fig. 3d illustrates an example of a display in operation according to an example embodiment;
Fig. 4a illustrates an example of a user interface panel according to one example embodiment;
Fig. 4b illustrates an example of a user interface panel according to an example embodiment; and
Fig. 5 illustrates a flow diagram of a method according to one example embodiment.

### DETAILED DESCRIPTION:

Due to size or space constraints, mobile or electronic device screens cannot generally display all keys, components, or functions of a graphical user interface. For instance, the virtual keypads on mobile telephone touch screens are often too small to include the entire keypad including numbers, special characters, and functions in a single view. This can especially be a problem in the display of full QWERTY keypads. Users often need to access numbers and special characters when typing messages, preparing calendar entries, writing technical text, or in other similar uses of the keypad. Conventional ways of accessing additional characters or functions tend to be slow and laborious for frequent users who often use their mobile devices for typing or to access special functionality.

Conventional solutions have included requiring the user to switch to an alternative user interface or keypad that includes the needed characters that are not available in the normal keypad view. However, mechanisms for switching to such an alternative user interface or keypad tend to be clumsy and frustrating especially for individuals who are fast typists thereby reducing the usability and speed of text entry significantly. Another conventional approach is to include several characters on each key button and enabling access to each of the characters through the use of a shift or similar button.

Accordingly, example embodiments of the invention provide for improved usability of the graphical user interface of a mobile or electronic device. One example embodiment provides a method to enable quick access to extra functionality, characters and/or number keys on a screen of a device, such as while typing on a touch screen keypad of a mobile device. In one example embodiment, when additional functionality or characters are needed, the panel containing those additional features can be dragged from a hidden position on the screen of the device, as will be discussed in more detail below. In embodiments according to the scope of the invention as defined by the appended claims, the hidden panel is positioned on an edge of the screen.

According to other example embodiments, however, the panel may not be hidden, but rather can be visibly placed in a condensed fashion (i.e., reduced in size) on a side of the screen. In this example embodiment, dragging the condensed panel towards the middle of the screen will increase the size of the panel and allow for a user to interact with its components. In this manner, the user can view the additional features or characters in the panel, but they will not take up a large amount of screen space until they are dragged by the user.

At least some example embodiments have the effect of preventing the display from becoming cluttered with GUI components or buttons, while still providing the user with easy access to the functionality of these components. An example of a possible approach is that of a tool "ribbon" found in some user interfaces where on-screen controls are grouped into several separate panels but only one of the panels are displayed at a time. The currently displayed panel can be changed by clicking on tabs at the top of the screen. Another example is where the panels of on-screen controls are displayed as toolbars that can be maximized or minimized by a menu selection. However, these approaches require a user to locate the appropriate panel, and perform a number of key presses, mouse clicks or touches in order to access the desired components. As such, these solutions can be confusing, laborious, time consuming and, therefore, are not user friendly.

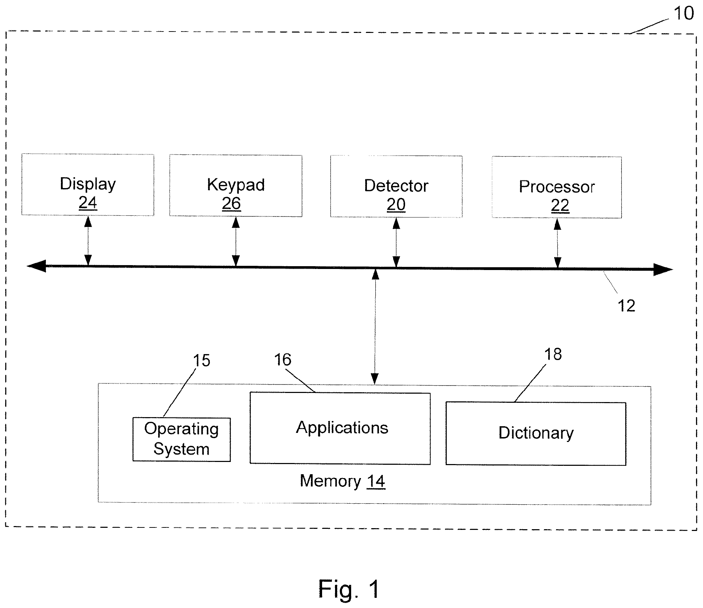

Fig. 1 illustrates an apparatus 10 that may be configured to provide a graphical user interface that enables quick access to additional functionalities or components, according to one example embodiment. In some example embodiments, the apparatus 10 is implemented in an electronic device, such as a computing system, telephone, wireless communications device, gaming system, music or media player, personal data assistant (PDA), or any other device with a graphical user interface or display.

Apparatus 10 may include a communications interface 12, such as a bus or other communications mechanism, for communicating information between components of apparatus 10. Alternatively, the components of apparatus 10 may communicate directly with each other, without use of communications interface 12.

Apparatus 10 also includes a processor 22, coupled to communications interface 12, for receiving, managing, and/or processing user input or information, and for executing instructions or operations. Processor 22 may be any type of general or specific purpose processor. In one example embodiment, processor 22 may be included within an application specific integrated circuit (ASIC).

Apparatus 10 further includes a memory 14 for storing information and instructions to be executed by processor 22. Memory 14 can be comprised of any combination of random access memory (RAM), read only memory (ROM), static storage such as a magnetic or optical disk, or any other type of machine or computer readable media. Computer readable media may be any available media that can be accessed by processor 22 and could include volatile or nonvolatile media, removable or non-removable media, and communication media. Communication media may include computer program code or instructions, data structures, program modules or other data, and includes any information delivery media.

Processor 22 can further be coupled, via communications interface 12 or directly, to a graphical user interface or display 24, such as a thin film transistor (TFT) liquid crystal display (LCD), for displaying information to a user. In some example embodiments, display 24 can be a touch screen display that allows a user to interact directly with what is presented on display 24 by using their finger, hand, stylus, or another passive object. However, in other example embodiments, display 24 may be a standard display, such as an LCD, that can be interacted with via a keypad 26 or cursor control device 28, such as a computer mouse. Any type of display capable of presenting information to the user may be used, according to certain example embodiments of the invention.

In one example, keypad 26 is a touch screen keypad displayed on display 24 where each of the keys can be activated by touching that portion of display 24. Keypad 26 may be a QWERTY keyboard, a standard E.161 12-key keypad, a keypad including symbols and/or numbers, or any other keypad configuration depending on the required application.

Apparatus 10 can further include a sensor or detector 20 for detecting and receiving some input provided, for example, by a user by means of display 24, keyboard 26, and/or cursor control device 28. Detector 20 can be a separate component of apparatus 10 or, alternatively, detector 20 can be included as a function of processor 22.

In one example embodiment, memory 14 stores software modules or applications that provide functionality when executed by processor 22. The modules may include an operating system 15 that provides operating system functionality for apparatus 10. The memory 14 may also store applications 16, such as text editing or messaging applications, games, web browsers, etc.

According to certain example embodiments, processor 22, together with memory 14, can control apparatus 10 to allow for access to a hidden panel of graphical user interface components. More specifically, when a control on display 24 is contacted, held down, and dragged by a passive object towards a center of display 24, a hidden panel of graphical user interface components is displayed on display 24. Dragging towards the "center" of the display 24 may encompass not only dragging towards a geometric centroid of the surface of the display 24, but also dragging away from the periphery of the display 24. Therefore, a drag may in example embodiments be considered a drag towards the centre of the display if its path moves from a more peripheral location on the display towards a point less peripheral on the display - even if the path does not follow a straight line towards the centroid of the display surface.

Apparatus 10 is controlled to continue to display the panel of graphical user interface components as long as the control is held down by the passive object, and is controlled to allow for the interaction with the components of the graphical user interface panel with a second object. Apparatus 10 is also controlled to snap the panel of graphical user interface components back into its original hidden position when the control is released by the object. In one example embodiment, the object is a user's finger, stylus, or similar.

The control may be any type of user interface control, such as a button, tab, or icon. In other example embodiments, the control may not be visible on display 24. According to some example embodiments, the control is located on the edge of display 24, such as on one of the sides, top, bottom, or corner of display 24. In other example embodiments not falling under the scope of the invention, the control may be the entire screen of display 24 such that holding and dragging any part of the screen will result in the display of the hidden panel of user interface components. Alternatively, and as well not falling under the scope of the invention, the control can be located on any position on the display 24 such that, when a user holds an object to any point on display 24, the control is activated.

In some example embodiments, the user can customize the placement and location of the control. For example, the user may modify the settings of apparatus 10 to customize the look and/or design of display 24, including the placement and location of the control as well as how the control is activated. In other example embodiments, these features can be preconfigured.

According to some example embodiments, detector 20 senses when a first object, such as a user's finger, is placed in contact with the control for the hidden panel. When the object continues to hold the control while dragging it towards the center of display 24, detector 20 senses this action and provides a signal to processor 22. In response to this signal, processor 22, with memory 14, controls apparatus 10 to display the panel of graphical user interface components associated with the control that has been dragged by the user.

Furthermore, detector 20 senses when a second object, such as a user's second finger, contacts the components of the hidden panel while the first object simultaneously continues to hold the control. In one example embodiment, detector 20 senses contact by the second object, such as a tap, and causes apparatus 10 to perform the action associated with the contact (e.g., writing or displaying a character) only after the second object has released contact (e.g., after releasing the tapping second finger). As a result, example embodiments of the invention are able to differentiate between a drag and a tap from the object. In this manner, characters are prevented from being written when the user intends only to drag the panel to be visible. The "second object" need not be a separate physical finger, stylus, etc. but may be a different contact point on the same one. For example, the objects may be different tines of the same furcated stylus.

The panel of graphical user interface components is continually displayed until detector 20 senses that the user has released the control. Upon such a release, detector 20 provides a signal to inform processor 22 that the control has been released. Processor 22 then controls apparatus 10 to stop displaying the panel of graphical user interface components, which are then snapped back into their original hidden position. Thus, conceptually, the panel can be considered to be held in its off-screen position by an elastic band that is stretched by dragging an object on display 24 thereby displaying the panel, and that snaps back to its original off-screen position when the object is lifted from display 24.

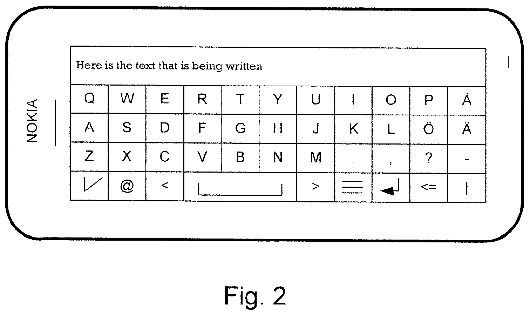

One example embodiment of the invention can be used in connection with accessing extra characters or keys on a keyboard or keypad of a touch screen. Fig. 2 illustrates an example keypad for a mobile device. As can be seen from Fig. 2, in a normal view, only four rows of characters are visible at one time. Traditionally, if a user wanted to access additional characters or numbers that are not included in the normal view, the user would need to press additional buttons or change views or modes. However, according to example embodiments of the invention, the user is able to access additional characters or number keys by holding their finger or other object to the touch screen and dragging their finger thereby resulting in the display of a keypad with the additional keys visible. The user is then able to interact, i.e., type in characters, with the additional keys that are now visible using another finger (the first finger being used to hold the additional keys visible).

After typing in the desired characters, the user can lift their dragging finger(s) off the touch screen and the additional keypad quickly slides back to its hidden position. According to an implementation not falling under the scope of the invention as defined in the appended claims the additional keypad can remain displayed even after the user lifts their dragging finger(s) from the touch screen. In this implementation, the user can hide the keypad by dragging it back towards its original off-screen position or by dragging the normal keypad back to its on-screen position. In other implementations disclosed herein to facilitate an understanding of the claimed invention, apparatus 10 can attempt to predict whether the user has completed use of the additional keypad. According to another implementation not falling under the scope of the invention as defined in the appended claims if the user types two characters from the additional keypad they dragged visible, apparatus 10 can conclude that the user wants to type more special characters (e.g., numbers) and will leave the additional keypad visible until it determines that the user has completed its use or until the user drags the normal keypad back onto the touch screen. The ability to select the preferred way to move between the normal and additional keypad(s) may be provided as an option within the settings of apparatus 10.

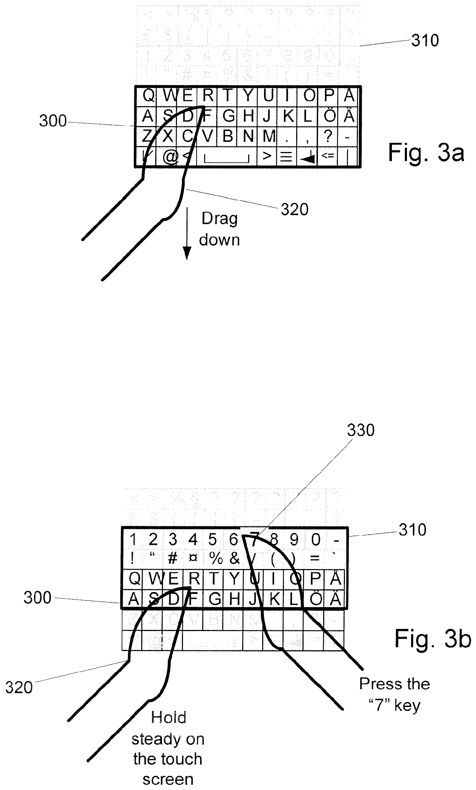

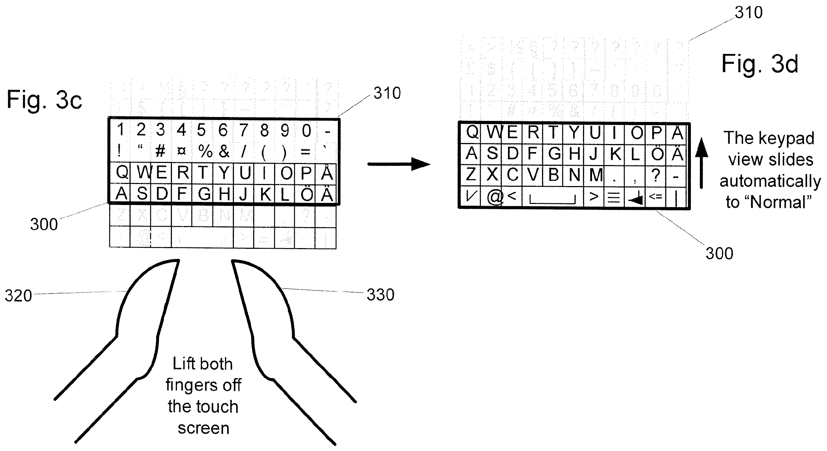

Figs. 3a-3d illustrate an example embodiment of the invention in operation. Fig. 3a shows the normal keypad 300 and a hidden keypad 310. In this example, when a user holds an object 320 to the keypad and drags down, at least a portion of the hidden keypad 310 appears or is exposed on the display, as shown in Fig. 3b. As further illustrated in Fig. 3b, while the user continues to hold object 320 to the keypad, the user can use a second object 330 to select the desired key. Then, as illustrated in Fig. 3c, when the user has completed the selection of characters from the hidden keypad 310, the user may lift object 320 from the display and the keypad view quickly slides back to normal, as shown in Fig. 3d. Also disclosed to facilitate an understanding of the claimed invention is another implementation not falling under the scope of the invention in which the user may drag the keypad view back to normal.
While figures 3a-3d illustrate an example embodiment directed to a keypad, it should be noted that embodiments of the invention are not limited to such an application. In certain example embodiments, in addition to a QWERTY keyboard or symbol keyboard, the panel of user interface components can include selections, toolbars, buttons, menus or the like related to interacting with an application. For example, the panel may include components for performing actions in a word processing application, picture viewing application, video player application, gaming application, or any other application that may be used by a user of a computing system or mobile device.

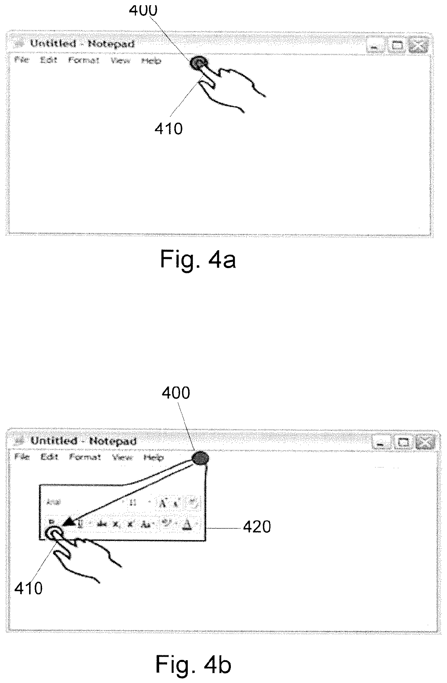

Figs. 4a and 4b illustrate an example operation of the invention according to another example embodiment. As shown in Fig. 4a, a control 400, such as a button or icon, is provided on an edge of the display or within a tool bar. By placing their finger 410 on the control 400 and dragging, user interface components within panel 420 are displayed. While the control 400 is held in place with finger 410, the user interface components within panel 420 can be interacted with using, for example, another finger (not shown). Once finger 410 is released, panel 420 snaps back to its original off-screen position.

In some example embodiments, a portion of panel 420 may peek onto the display, for instance, to show the user where the hidden panel is located and to act as a handle for the user to drag. However, in other example embodiments, the user may drag an edge of the display (or any other part of the display) to move a particular panel into view. Thus, in some example embodiments according to the scope of the invention, the off-screen position of the hidden panel may be one of the sides of the display or in a corner thereof. However, according to other example embodiments not falling under the scope of the invention, the panel can be displayed by dragging any portion of the display, for instance a panel could be dragged down from underneath a title bar, or out of a component in a toolbar. According to another example embodiment not falling under the scope of the invention, a drag scrollbar can be placed at one or more edges of the display such that the hidden panel can be displayed by dragging the drag scrollbar.

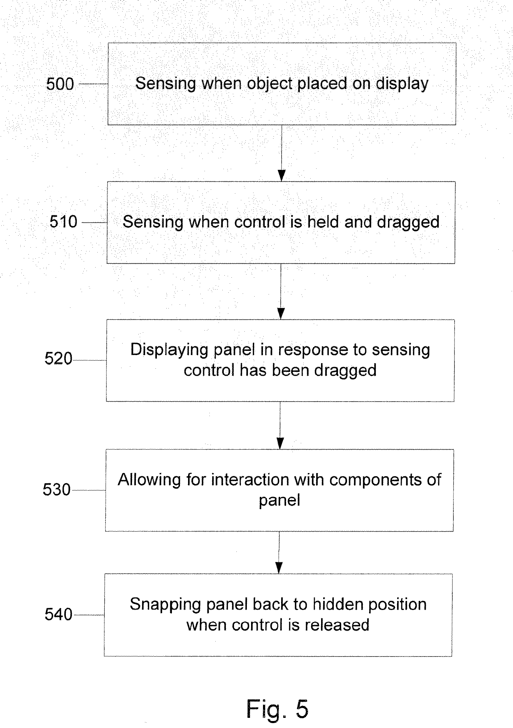

Fig. 5 illustrates a flow chart of a method for displaying a panel of user interface components, according to one example embodiment. In some example embodiments, the method can be performed by an apparatus or device, such as a personal computer, laptop computer, tablet computer, mobile telephone, smart phone, gaming device, electronic reader, or any other device with a user interface.

The method of Fig. 5 includes, at 500, sensing when a first object has been placed in contact with a display. In some examples, the object may be placed in contact with a control that may be in any location on the display. At 510, the method further includes determining that the control is held and dragged by the object. The method then includes, at 520, displaying a previously hidden or inactive panel of user interface components when it is sensed that the control has been dragged. At 530, the method includes allowing for interaction with the user interface components with a second object while the control is continuously held by the first object. At 540, the method includes snapping the panel back into its original, hidden or inactive position when it is sensed that the control has been released. In some example embodiments falling under the scope of the invention, the release of the control may include removing the first object from contact with the display. Also disclosed are some example implementations not falling under the scope of the invention, in which the release of the control may include dragging the panel back towards its original position.

According to certain example embodiments, the method described above can be stored as instructions on a computer readable medium and executed by a processor. The computer-readable medium may be a non-transitory medium that can be encoded with information that, when executed in hardware, performs a process corresponding to the process disclosed in Fig. 5, or any other process discussed herein. Examples of non-transitory mediums include a computer-readable medium, a computer distribution medium, a computer-readable storage medium, and a computer program product.

Based on the above, example embodiments of the invention can provide an improved experience for users of mobile devices through an innovative user interface. Example embodiments of the invention can provide a faster, easier and more intuitive solution that requires fewer user actions to momentarily open a panel and interact with its contents. Thus, example embodiments of the invention can result in a fast and efficient way to input text and characters into mobile devices, which is especially useful when typing messages and e-mails with the mobile device.

It should be noted that many of the functional features described in this specification have been presented as modules or applications, in order to more particularly emphasize their implementation independence. For example, a module may be implemented as a hardware circuit comprising custom VLSI circuits or gate arrays, off-the-shelf semiconductors such as logic chips transistors, or other discrete components. A module may also be implemented in programmable hardware devices such as field programmable gate arrays, programmable array logic, programmable logic devices or the like.

Modules may also be partially or completely implemented in software for execution by various types of processors. An identified module of executable code may, for instance, comprise one or more physical or logical blocks of computer instructions which may, for instance, be organized as an object, procedure, or function. Nevertheless, the executables of an identified module need not be physically located together, but may comprise disparate instructions stored in different locations which, when joined logically together, comprise the module and achieve its stated purpose.

Indeed, a module of executable code could be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network.

The described features, advantages, and characteristics of the invention may be combined in any suitable manner in one or more embodiments. One skilled in the relevant art will recognize that the invention can be practiced without one or more of the specific features or advantages of a particular embodiment. In other instances, additional features and advantages may be recognized in certain embodiments that may not be present in all embodiments of the invention.

Therefore, one having ordinary skill in the art will readily understand that the invention as discussed above may be practiced with steps in a different order, may be practiced with hardware elements in configurations which are different than those which are disclosed, and that embodiments may be combined in any appropriate manner. Accordingly, although the invention has been described based upon these preferred embodiments, it would be apparent to those of skill in the art that certain modifications, variations, and alternative constructions would be apparent, while remaining within the scope of the invention. The scope of the invention is defined by the appended claims.

## Claims

1. A method, comprising:
determining (500, 510) that a control on an edge of a touch screen display is contacted, held, and dragged towards a center of the touch screen display by a first object, the edge comprising at least one of a top, bottom, sides or corners of the touch screen display;
displaying (520) a panel of one or more user interface components at least a portion of the panel being displayed in response to the determining, wherein the panel is associated with the control on the touch screen display;
while the holding of the control by the first object is continued, allowing for interaction with one or more components of the at least a portion of the panel using a second object;
determining that the control is released comprising sensing that the first object is no longer in contact with the control; and
ceasing to display (540) the at least a portion of the panel in response to sensing that the first object is no longer in contact with the control.

2. The method according to claim 1, wherein the interaction comprises selecting or activating components of the at least a portion of the panel.

3. The method according to claim 2, wherein the displaying comprises displaying the panel comprising at least one of a keypad, symbol keypad, toolbar, application, video player, or picture viewer.

4. The method according to any of claim 2, wherein the selecting comprises selecting keys from the keypad.

5. The method according to any of claims 1-4, wherein the determining comprises determining that the control is contacted, held, and dragged by a first finger of a user, and wherein the allowing comprises allowing for the interaction with the components of the at least a portion of the panel by a second finger of the user.

6. An apparatus, comprising means for:
determining (500, 510) that a control on an edge of a touch screen display is contacted, held, and dragged towards a center of the touch screen display by a first object, the edge comprising at least one of the top, bottom, sides or corners of the touch screen display;
displaying (520) a panel of one or more user interface components at least a portion of the panel being displayed in response to the determining, wherein the panel is associated with the control on the touch screen display;
while the holding of the control by the first object is continued, allowing for interaction with one or more components of the at least a portion of the panel using a second object;
determining that the control is released comprising sensing that the first object is no longer in contact with the control; and
ceasing to display (540) the at least a portion of the panel in response to sensing that the first object is no longer in contact with the control.

7. The apparatus according to claim 6, further comprising means for detecting selection or activation of components of the at least a portion of the panel.

8. The apparatus according to any of claims 6-7, wherein the panel comprises at least one of a keypad, symbol keypad, toolbar, application, video player, or picture viewer.

9. The apparatus according to any of claims 6-8, further comprising means for detecting the selection of keys from the keypad.

10. The apparatus of any of claims 6-9, comprising:
at least one processor (22); and at least one memory (14) including computer program code, the at least one memory and the computer program code (15, 16) configured, with the at least one processor, to cause the apparatus to execute the method of claim 1.

11. A computer program embodied on a computer readable storage medium, the computer program configured to control a processor to perform a process, the process comprising:
determining (500, 510) that a control on an edge of a touch screen display is contacted, held, and dragged towards a center of the touch screen display by a first object, the edge comprising at least one of a top, bottom, sides or corners of the touch screen display;
displaying (520) a panel of one or more user interface components at least a portion of the panel being displayed in response to the determining, wherein the panel is associated with the control on the touch screen display;
while the holding of the control by the first object is continued, allowing for interaction with one or more components of at least a portion of the panel using a second object;
determining that the control is released comprising sensing that the first object is no longer in contact with the control; and
ceasing to display at least a portion of the panel in response to sensing that the first object is no longer in contact with the control.

## Patentansprüche

1. Verfahren, das Folgendes umfasst:
Bestimmen (500, 510), dass eine Steuerung an einem Rand einer Touchscreenanzeige von einem ersten Objekt kontaktiert, gehalten und zu einer Mitte der Touchscreenanzeige gezogen wird, wobei der Rand mindestens eines von einer Oberseite, einer Unterseite, Seiten oder Ecken der Touchscreenanzeige umfasst;
Anzeigen (520) eines Paneels von einer oder mehreren Benutzerschnittstellenkomponenten, wobei mindestens ein Abschnitt des Paneels in Reaktion auf das Bestimmen angezeigt wird, wobei das Paneel mit der Steuerung auf der Touchscreenanzeige verknüpft ist;
während das Halten der Steuerung durch das erste Objekt fortgesetzt wird, Erlauben einer Interaktion mit einer oder mehreren Komponenten des mindestens einen Abschnitts des Paneels unter Verwendung eines zweiten Objekts;
Bestimmen, dass die Steuerung freigegeben wurde, was das Erfassen, dass das Objekt nicht mehr mit der Steuerung in Kontakt ist, umfasst; und
Beenden der Anzeige (540) des mindestens einen Abschnitts des Paneels in Reaktion auf das Erfassen, dass das erste Objekt nicht mehr mit der Steuerung in Kontakt ist.

2. Verfahren nach Anspruch 1, wobei die Interaktion das Auswählen oder Aktivieren von Komponenten des mindestens einen Abschnitts des Paneels umfasst.

3. Verfahren nach Anspruch 2, wobei das Anzeigen das Anzeigen des Paneels umfasst, das mindestens eines von einem Tastenfeld, einem Symboltastenfeld, einer Werkzeugleiste, einer Anwendung, einem Videoplayer oder einem Bildbetrachter umfasst.

4. Verfahren nach Anspruch 2, wobei das Auswählen das Auswählen von Tasten auf dem Tastenfeld umfasst.

5. Verfahren nach einem der Ansprüche 1 bis 4, wobei das Bestimmen Folgendes umfasst
Bestimmen, dass die Steuerung von einem ersten Finger eines Benutzers kontaktiert, gehalten und gezogen wird, und wobei das Erlauben das Erlauben der Interaktion mit den Komponenten des mindestens einen Abschnitts des Paneels durch einen zweiten Finger des Benutzers umfasst.

6. Vorrichtung, die Mittel für Folgendes umfasst:
Bestimmen (500, 510), dass eine Steuerung an einem Rand einer Touchscreenanzeige von einem ersten Objekt kontaktiert, gehalten und zu einer Mitte der Touchscreenanzeige gezogen wird, wobei der Rand mindestens eines von der Oberseite, der Unterseite, den Seiten oder den Ecken der Touchscreenanzeige umfasst;
Anzeigen (520) eines Paneels von einer oder mehreren Benutzerschnittstellenkomponenten, wobei mindestens ein Abschnitt des Paneels in Reaktion auf das Bestimmen angezeigt wird, wobei das Paneel mit der Steuerung auf der Touchscreenanzeige verknüpft ist;
während das Halten der Steuerung durch das erste Objekt fortgesetzt wird, Erlauben einer Interaktion mit einer oder mehreren Komponenten des mindestens einen Abschnitts des Paneels unter Verwendung eines zweiten Objekts;
Bestimmen, dass die Steuerung freigegeben wurde, was das Erfassen, dass das Objekt nicht mehr mit der Steuerung in Kontakt ist, umfasst; und
Beenden der Anzeige (540) des mindestens einen Abschnitts des Paneels in Reaktion auf das Erfassen, dass das erste Objekt nicht mehr mit der Steuerung in Kontakt ist.

7. Vorrichtung nach Anspruch 6, die ferner Mittel zum Detektieren einer Auswahl oder einer Aktivierung von Komponenten des mindestens einen Abschnitts des Paneels umfasst.

8. Vorrichtung nach einem der Ansprüche 6 bis 7, wobei das Paneel mindestens eines von einem Tastenfeld, einem Symboltastenfeld, einer Werkzeugleiste, einer Anwendung, einem Videoplayer oder einem Bildbetrachter umfasst.

9. Vorrichtung nach einem der Ansprüche 6 bis 8, die ferner Mittel zum Detektieren der Auswahl von Tasten auf dem Tastenfeld umfasst.

10. Vorrichtung nach einem der Ansprüche 6 bis 9, die Folgendes umfasst:
mindestens einen Prozessor (22); und
mindestens einen Speicher (14), der einen Computerprogrammcode beinhaltet,
wobei der mindestens eine Speicher und der Computerprogrammcode (15, 16) dazu ausgelegt sind, die Vorrichtung mit dem mindestens einen Prozessor zu veranlassen, das Verfahren nach Anspruch 1 auszuführen.

11. Computerprogramm, das auf einem computerlesbaren Speichermedium enthalten ist, wobei das Computerprogramm dazu ausgelegt ist, einen Prozessor zu steuern, um einen Prozess durchzuführen, wobei der Prozess Folgendes umfasst:
Bestimmen (500, 510), dass eine Steuerung an einem Rand einer Touchscreenanzeige von einem ersten Objekt kontaktiert, gehalten und zu einer Mitte der Touchscreenanzeige gezogen wird, wobei der Rand mindestens eines von einer Oberseite, einer Unterseite, Seiten oder Ecken der Touchscreenanzeige umfasst;
Anzeigen (520) eines Paneels von einer oder mehreren Benutzerschnittstellenkomponenten, wobei mindestens ein Abschnitt des Paneels in Reaktion auf das Bestimmen angezeigt wird, wobei das Paneel mit der Steuerung auf der Touchscreenanzeige verknüpft ist;
während das Halten der Steuerung durch das erste Objekt fortgesetzt wird, Erlauben einer Interaktion mit einer oder mehreren Komponenten mindestens eines Abschnitts des Paneels unter Verwendung eines zweiten Objekts;
Bestimmen, dass die Steuerung freigegeben wurde, was das Erfassen, dass das Objekt nicht mehr mit der Steuerung in Kontakt ist, umfasst; und
Beenden der Anzeige mindestens eines Abschnitts des Paneels in Reaktion auf das Erfassen, dass das erste Objekt nicht mehr mit der Steuerung in Kontakt ist.

## Revendications

1. Procédé, comprenant :
la détermination (500, 510) qu'une commande sur un bord d'un écran tactile est touchée, maintenue et amenée à glisser en direction d'un centre de l'écran tactile par un premier objet, le bord comprenant au moins un d'un haut, bas, de côtés ou coins de l'écran tactile ;
l'affichage (520) d'un panneau d'un ou plusieurs composants d'interface utilisateur, au moins une partie du panneau étant affichée en réponse à la détermination, dans lequel le panneau est associé à la commande sur l'écran tactile ;
tandis que le maintien de la commande par le premier objet est poursuivi, le fait de permettre une interaction avec un ou plusieurs composants de la au moins une partie du panneau au moyen d'un deuxième objet ;
la détermination que la commande est relâchée, comprenant la détection que le premier objet n'est plus en contact avec la commande ; et
le fait de cesser d'afficher (540) la au moins une partie du panneau en réponse à la détection que le premier objet n'est plus en contact avec la commande.

2. Procédé selon la revendication 1, dans lequel l'interaction comprend la sélection ou l'activation de composants de la au moins une partie du panneau.

3. Procédé selon la revendication 2, dans lequel l'affichage comprend l'affichage du panneau comprenant au moins un d'un clavier, clavier à symboles, barre d'outils, application, lecteur vidéo, ou visionneuse d'images.

4. Procédé selon la revendication 2, dans lequel la sélection comprend la sélection de touches à partir du clavier.

5. Procédé selon l'une quelconque des revendications 1 à 4, dans lequel la détermination comprend la détermination que la commande est touchée, maintenue et amenée à glisser par un premier doigt d'un utilisateur, et dans lequel le fait de permettre comprend le fait de permettre l'interaction avec les composants de la au moins une partie du panneau par un deuxième doigt de l'utilisateur.

6. Appareil, comprenant des moyens pour :
déterminer (500, 510) qu'une commande sur un bord d'un écran tactile est touchée, maintenue et amenée à glisser en direction d'un centre de l'écran tactile par un premier objet, le bord comprenant au moins un d'un haut, bas, de côtés ou coins de l'écran tactile ;
l'affichage (520) d'un panneau d'un ou plusieurs composants d'interface utilisateur, au moins une partie du panneau étant affichée en réponse à la détermination, dans lequel le panneau est associé à la commande sur l'écran tactile ;
tandis que le maintien de la commande par le premier objet est poursuivi, le fait de permettre une interaction avec un ou plusieurs composants de la au moins une partie du panneau au moyen d'un deuxième objet ;
la détermination que la commande est relâchée, comprenant la détection que le premier objet n'est plus en contact avec la commande ; et
le fait de cesser d'afficher (540) la au moins une partie du panneau en réponse à la détection que le premier objet n'est plus en contact avec la commande.

7. Appareil selon la revendication 6, comprenant en outre des moyens pour la détection, la sélection ou l'activation de composants de la au moins une partie du panneau.

8. Appareil selon l'une quelconque des revendications 6 à 7, dans lequel le panneau comprend au moins un d'un clavier, clavier à symboles, barre d'outils, application, lecteur vidéo, ou visionneuse d'images.

9. Appareil selon l'une quelconque des revendications 6 à 8, comprenant en outre des moyens pour la détection de la sélection de touches à partir du clavier.

10. Appareil selon l'une quelconque des revendications 6 à 9, comprenant :
au moins un processeur (22) ; et
au moins une mémoire (14) comportant un code de programme informatique,
la au moins une mémoire et le code de programme informatique (15, 16) étant configurés, avec le au moins un processeur, pour amener l'appareil à exécuter le procédé selon la revendication 1.

11. Programme informatique mis en œuvre sur un support de stockage lisible par ordinateur, le programme informatique étant configuré pour commander un processeur pour qu'il effectue un processus, le processus comprenant :
la détermination (500, 510) qu'une commande sur un bord d'un écran tactile est touché, maintenu et fait glisser en direction d'un centre de l'écran tactile par un premier objet, le bord comprenant au moins un d'un haut, bas, de côtés ou coins de l'écran tactile ;
l'affichage (520) d'un panneau d'un ou plusieurs composants d'interface utilisateur, au moins une partie du panneau étant affichée en réponse à la détermination, dans lequel le panneau est associé à la commande sur l'écran tactile ;
tandis que le maintien de la commande par le premier objet est poursuivi, le fait de permettre une interaction avec un ou plusieurs composants d'au moins une partie du panneau au moyen d'un deuxième objet ;
la détermination que la commande est relâchée, comprenant la détection que le premier objet n'est plus en contact avec la commande ; et
le fait de cesser d'afficher au moins une partie du panneau en réponse à la détection que le premier objet n'est plus en contact avec la commande.
